# EUROPÄISCHE PATENTSCHRIFT

(11) **EP 0 406 935 B1**
(45) Veröffentlichungstag und Bekanntmachung des Hinweises auf die Patenterteilung: **09.06.1993**
(21) Anmeldenummer: 90201654.2
(22) Anmeldetag: 25.06.1990
(51) Int. Cl.: B21D 28/24, B60P 7/08

(54) **Verfahren und Vorrichtung zum Ansetzen von Bügeln an Seitenwaänden von Lastkraftwagen**
Method and device for attaching shackles to the sideboards of trucks
Méthode et dispositif pour attacher des archets aux parois latérales de camions

(30) Priorität: 03.07.1989 NL 8901683
(43) Veröffentlichungstag der Anmeldung: 09.01.1991
(73) Patentinhaber: Dinkla, Jan, NL-2983 HR Ridderkerk (Z.-H.) (NL); Dinkla, Renée, NL-3341 BK Hendrik-Ido-Ambacht (NL)
(72) Erfinder: Dinkla, Jan, NL-2983 HR Ridderkerk (Z.-H.) (NL); Dinkla, Renée, NL-3341 BK Hendrik-Ido-Ambacht (NL)
(74) Vertreter: Siemens, Andreas Meinhard Ernest, Dipl.-Ing.

(56) Entgegenhaltungen:
- DE-A- 2 706 849
- DE-A- 3 447 006
- GB-A- 2 167 354
- US-A- 4 386 515

## Beschreibung

Die vorliegende Erfindung bezieht sich auf ein verbessertes Verfahren zum Ansetzen von Bügeln oder Binderingen an den Seitenwänden von Lastkraftwagen und anderen Fahrzeugen sowie Booten, mit dem Zweck, einen zuverlässigen Verschluss der Ladung unter Tuchplanen des Fahrzeuges oder des Bootes zu gewährleisten, der auch die Möglichkeit bietet, den Verschluss zweckmässig zu plombieren, wie dies für den internationalen Transport unter Kontrolle des Zolls oder anderer Behörden erforderlich ist. Die in dieser Beschreibung gemeinten Bügel werden TIR-Ringe genannt, weil sie insbesondere, jedoch nicht ausschliesslich für den Verschluss und das Versiegeln von Frachtgütern gemäss den Bedingungen des TIR-Uebereinkommens (Transport International des Marchandises par la Route) verwendet werden.

Nach dem bekannten Stand der Technik werden Ringe aus Stahl auf stählerne Platten geschweisst, die dann mit Nietbolzen aus Aluminium an der Seitenwand befestigt werden; auch werden Aluminiumringe in genieteter Ausführung angewandt.

Stahlringe sind korrosionsanfällig, und Aluminiumringe sind nicht verschleissfest.

Für beide Anwendungen sind vorgebohrte Löcher erforderlich.

Zudem ist dieses Verfahren zeitraubend und umständlich.

Nach der vorliegenden Erfindung werden die Nachteile von chemischer Korrosion und von Spannungskorrosion sowie von Verschleiss behoben. In der Niederländischen Offenlegungsschrift Nr. 75 12 373 werden ein Verfahren und eine Vorrichtung zum Nieten von zwei Platten beschrieben, wobei Löcher in parallel auf einander gelegten Platten gestanzt werden, indem der Stiel eines Nagels duch die Platten in eine aufnehmende Form eingebracht wird, und die Platten darauf neben den Nagelkopf gebracht werden, und das eingesteckte Ende des Nagelstiels radial stärker werdend gestaucht wird durch Druck gegen einen Ambossstock, und nachfolgend das radial verstärkte Ende des Nagelstiels entfernt wird.

Diese Methode kann jedoch zum Ansetzen von Augen oder Bügeln in Seitenbordwänden nicht verwendet werden, da diese aus vielfach profiliertem Aluminiumblech bestehen.

Erfindungsgemäss werden hohle oder teilweise hohle U-förmige Bügel aus rostwehrendem Stahl verwendet, die in einem Abstand, welcher etwas grösser ist als die Stärke der Seitenwand mit einem Aussenkragen versehen sind, und bei denen der Teil zwischen dem Ende und dem Aussenkragen in eine korrosionswehrende Kunstharzlösung (z.B.Polyurethan) getaucht wird.

Das Verfahren zum Ansetzen von Bügeln an Seitenwandbleche ist dadurch gekennzeichnet, dass man die hohlen oder teilweise hohlen U-förmigen Bügel, die nahe den Enden der Beine mit Aussenkragen versehen sind, in einer senkrechten Presse durch Ausstanzen des Bleches, Einschieben der Bügel in die ausgestanzten Löcher, Ausdehnen der Bügelenden und Feststauchen mittels Stauchpflöcken an der Innenseite des Seitenwandbleches befestigt.

Die Vorrichtung zum Ansetzen dieser hohlen U-förmigen Bügel besteht aus einer senkrechten Presse, die einen Oberteil besitzt, welcher aus einem senkrecht beweglichen gelagerten Stempel besteht, mit einer Klemmbacke, die durch eine Druckfeder und einen Spannzylinder gehalten wird, und an der Unterseite mit einem gehärteten Bügelhalter versehen ist, in welchen die hohlen U-förmigen Bügel mittels eines Füllarmes eingeführt werden, und die Seitenwandplatte darunter geschoben wird.

Der untere Teil dieser Vorrichtung enthält einen Ambossstock, auf welchen durch einen schiebenden Leiter, der durch einen Einstellzylinder in drei Stellungen bewegt werden kann, nach einander ein Paar Schneidebuchsen, ein Paar massive Dehnungspflöcke und ein Paar Stauchpflöcke gesetzt werden. Die Blechplatte der Seitenwand wird waagerecht zwischen den Oberteil und den unteren Teil gelegt, sodass der Oberteil, dessen Bügelhalter mit den U-förmigen Bügeln versehen wurde, sich oberhalb der Linie für die zu befestigenden U-förmigen Bügel befindet.

Mittels eines unteren hydraulischen oder pneumatischen Zylinders hebt sich der Ambossstock, und es kommen die beiden Schneidebuchsen in Stellung gegen den Seitenwandteil, wonach der obere Stempel sich senkt durch Einwirkung eines oberen hydraulischen oder pneumatischen Zylinders, wobei die beiden Beine des eingeklemmten Bügels, welche als Stanzwerkzeug wirken, zwei Löcher in den Seitenwandteil ausstanzen, und der Bügel durchgedrückt wird bis an den Aussenkragen auf den Beinen.

Nach dem Senken des Ambossstockes verschiebt sich der Leiter und es gelangen die Dehnungspflöcke den Enden der Bügelbeine entgegen.

Durch einen nachfolgenden Druck vom hydraulischen oder pneumatischen Zylinder werden die Enden der Bügelbeine gegen die Dehnungspflöcke gedrückt, wodurch die Enden der Beine sich radial um einen Winkel von etwa 45° erweitern.

Darauf verschiebt der Leiter die Dehnungspflöcke und stellt die Stauchpflöcke unter die gedehnten Enden.

Der untere hydraulische oder pneumatische Zylinder presst dann diese Stauchpflöcke gegen die gedehnten Enden und staucht diese gegen das Seitenwandblech,sodass die Form eines Innenkragens entsteht.

Bei dieser Bearbeitung wird die Kunststofflösung zwischen die beiden entstandenen Kragen und die Wandöffnung gepresst, sodass eine vorzüglich korrosionsschützende Schicht zwischen den Beinen der Bügel und dem Blech gebildet wird.

Der Einstellzylinder, der die drei Bewegungen und Positionen einstellt, wird gesteuert von einer elektronischen oder pneumatischen Steuerung, deren Programm die Andrückzeit, und das verschieben der Schneidebuchsen, der Dehnungspflöcke und der Stauchpflöcke bestimmt.

Durch Auswurföffnungen im Ambossstock fallen die ausgestanzten Stückchen des Seitenwandbleches abwärts.

Nach den drei Arbeitsphasen ist der U-förmige Bügel durch den Aussenkragen und den durch den Stauchvorgang entstandenen Innenkragen fest mit dem Seitenwandblech verbunden.

Infolge des Ausschlusses von Spannungen kann keine Spannungskorrosion auftreten, und wegen der Kunststoffschicht zwischen den Kragen kann keine chemische Korrosion entstehen. Es wird nicht geschweisst.

Die Bügel aus rostwehrendem Stahl sind sehr beständig gegen mechanischen Verschleiss und gegen Beschädigung.

Die Erfindung wird an Hand der beigefügten Figuren näher erläutert.

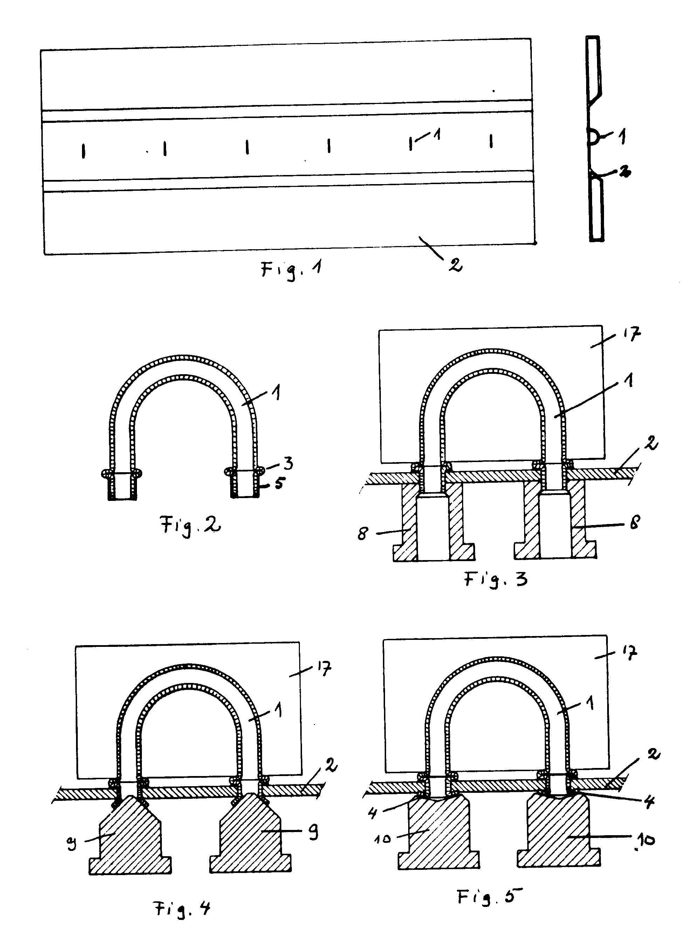

Figur 1 zeigt eine Seitenansicht und einen senkrechten Querschnitt eines Seitenwandbleches (2), welches profiliert ist, und die Bügel (1).

Figur 2 zeigt einen hohlen U-förmigen Bügel (1) mit Aussenkragen (3) an den Enden der Beine, welche mit der Kunststoffschicht (5) bedeckt sind.

Figur 3 zeigt schematisch die Stellung des Bügels (1) in den Halter (17) auf dem Seitenwandblech (2) nach dem Stanzen mit den Schneidebuchsen (8).

Figur 4 zeigt die darauf folgend angesetzten Dehnungspflöcke (9), die die Enden des Bügels erweitern.

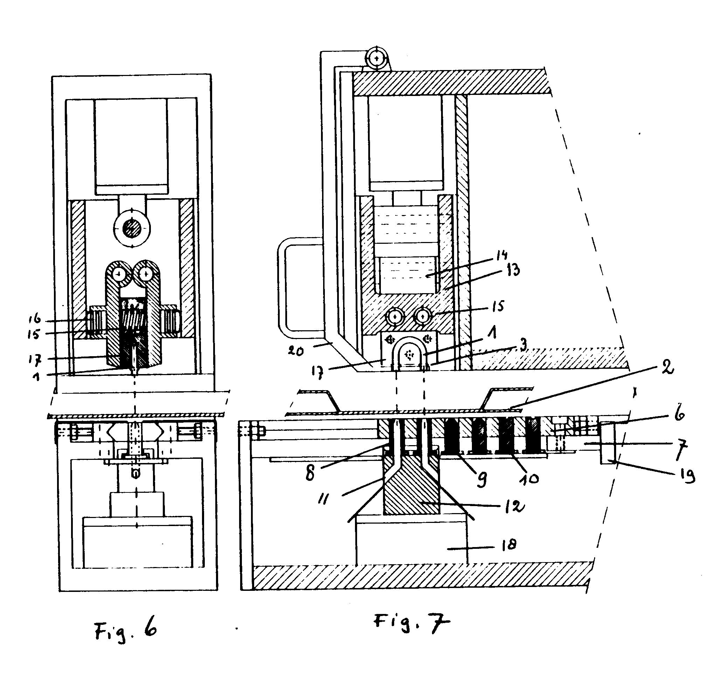

Figur 5 zeigt das Ansetzen der Stauchpflöcke (10), die den Innenkragen (4) des Bügels (1) formen.

Figuren 6 und 7 zeigen senkrechte Querschnitte der Vorrichtung, welche für das vorliegende Verfahren benutzt wird.

In diesen Querschnitten enthält der obere Teil der Presse den Stempel (13) mit Klemmbacke (14), Druckfeder (15) und Spannzylinder (16), sowie den in den Bügelhalter (17) eingesetzten Bügel (1), welcher vom Füllarm (20) zugeführt wurde.

Der untere Teil zeigt den hydraulischen oder pneumatischen Zylinder (18), mit dem Ambossstock (12) darauf, versehen mit zwei kanalförmigen Auswürfen (11) für die ausgestanzten Stückchen des Seitenwandbleches (2), und ein Paar Schneidebuchsen (8), Dehnungspflöcke (9) und Stauchpflöcke (10) in dem schiebenden Leiter (6), der vom Einstellzylinder (7) bewegt wird und nach einander drei Stellungen einnimmt; erst stanzen, dann erweitern der Bügelenden, und danach das Stauchen zu einem Innenkragen (4). Der Schubregler (19) steuert den Leiter (6).

Die automatische Bewegung kann elektrisch durch einen Motor, zum Beispiel einen Servo-Motor mit Servo-Schaltung, durch einen hydraulischen Zylinder, wobei die Steuerung elektronisch mit Hilfe eines einfachen Programms stattfindet, oder durch einen pneumatischen Zylinder mit drei Einstellungen mit pneumatischer Steuerung ausgeführt werden.

Hohe Fertigungsgeschwindigkeiten mit wenig Abfall werden mit dem erfindungsgemässen Verfahren erreicht.

## Patentansprüche

1. Verfahren zum Ansetzen von Bügeln (1) an Seitenwänden (2) von Lastkraftwagen und Booten,zum Verschluss von schützenden Tuchplanen, welche von solchen Bügeln (1) festgehalten werden, dadurch gekennzeichnet, dass man hohle oder teilweise hohle U-förmige Bügel (1), die nahe den Enden der Beine mit Aussenkragen (3) versehen sind, in einer senkrechten Presse durch Ausstanzen des Seitenwandbleches (2), Einschieben der Bügel (1) in die ausgestanzten Löcher, Ausdehnen der Bügelenden und Feststauchen mittels Stauchpflöcken (10) an der Innenseite des Seitenwandbleches (2) befestigt.

2. Verfahren nach Anspruch 1, dadurch gekennzeichnet, dass man die Bügel (1) zuvor mit einer Kunststofflösung gegen Korrosion schützt.

3. Seitenwandblech (2) für Lastkraftwagen,mit U-förmigen Bügeln (1), in einer Reihe, zum Befestigen und Verschluss der Tuchplanen an dem Seiten wand blech (2), dadurch gekennzeichnet, dass die Bügel (1) durch Kragen (3) an der Aussenseite des Seitenwandblechs (2) und durch gestauchte Kragen (4) an der Innenseite des Seitenwandblechs (2) befestigt sind.

4. Vorrichtung zum Ansetzen von Bügeln (1) an Seitenwandblechen für Lastkraftwagen, welche zum Verschluss von schützenden Tuchplanen dienen, die von Bügeln (1) gehalten werden, welche Vorrichtung aus einer senkrechten Presse besteht, mit einem oberen Teil, welcher einen Stempel (13) enthält, und einem unteren Teil, welcher einen Ambosstock (12) enthält, der durch einen hydraulischen oder pneumatischen Zylinder (18) nach oben bewegbar ist, dadurch gekennzeichnet, dass der Stempel (13) eine Klemmbacke (14) und einen Bügelhalter (17) hält für hohle oder teilweise hohle U-förmige Schneidbuchses (8) Bügel (1), und ein Leiter (6) im unteren Teil nach einander ein Paar Dehnungspflöcke (9) und Stauchpflöcke (10) enthält, die verschiebbar sind auf dem Ambosstock (12), wobei der Leiter (6) nach einander die Schneidbuchsen (8), dann die Dehnungspflöcke (9) und zuletzt die Stauchpflöcke (10) über den Ambosstock (12) bewegt, wonach das Seitenwandblech (2) weitergeschoben wird.

5. Vorrichtung nach Anspruch 4, dadurch gekennzeichnet, dass der Leiter (6) für die Bewegung zur stanzenden, dehnenden und stauchenden Bearbeitung der U-förmigen Bügel (1) durch einen Schubregler (19) gemäss einem Programm gesteuert wird.

## Claims

1. A method for the attachment of fastener clamps (1) at side walls (2) of trucks and cargo boats,for locking up the protective tarpaulins, which are kept by means of such clamps (1), characterized in that entirely or partly hollow fastener clamps (1),which are bent in U-shape and which are provided with outer collars (3), near to the ends of their legs,are affixed in a vertical press by punching the side wall sheet (2), introducing said fastener clamps (1) into the punched apertures, expanding the ends of said clamps and butt of same with an upsetting tool (10) at the inner side of the side wall sheet (2).

2. A method according to claim 1, characterized in that the fastener clamps (1) are being protected against corrosion by means of a polymer solution.

3. A side wall sheet (2) for cargo trucks, with fastener clamps (1) bent in U-shape, aligned for the fixation and locking of the tarpaulins at the side wall sheeting (2), characterized in that said fastener clamps (1) are attached at the outer surface of the side wall sheet (2) by means of outer collars (3) and at the inner side of the side wall sheet (2) by means of butt collars (4).

4. A device for the attachment of fastener clamps (1) at side wall sheets of cargo trucks, for the locking up of protective tarpaulins, which are kept by said fastener clamps (1), said device comprising a vertical press having an upper part with a ram (13) and a lower part having a die (12),which is movable upwards by a hydraulic or pneumatic cylinder (18),characterized in that said ram (13) has a clamping device (14) and a jaw (17) for hollow or partly hollow clamps (1),which are bent in U-shape, and a guiding equipment (6) in the lower part, an aligned number of cutting dies (8), dilatation bars (9) and upsetting tools (10),which are slidable over the die (12), where the guiding device consecutively moves the cutting dies (8), then the dilatation bars (9),and finally the upsetting tools (10) over the die (12), after which the side wall sheet (2) is sliding off.

5. A device according to claim 4, characterized in that the guiding equipment (6) for the movement towards the punching, expanding and upsetting treatment of the fastener clamps (1) is controlled by a sliding control apparatus (19) according to a programme.

## Revendications

1. Un procédé de rattachement de colliers (1) de fixation aux tôles de parois latérales (2) de camions et de bateaux, afin de fermer la capacité aux bâches protectrices,qui sont tenues par lesdits colliers (1), caractérisé en ce que la fixation de colliers (1), qui sont entièrement ou partiellement creux et courbés en forme U, avec des collets (3) extérieurs près des bouts des branches est effectuée dans une presse a piston vertical, poinçonnant la tôle de la paroi latérale (2), lancement desdits colliers (1) dans les trous poinçonnés, en dilatant les bouts des colliers, et un refoulement par des butées (10) au coté intérieur de la tôle de la paroi latérale (2).

2. Un procédé selon la revendication 1, caractérisé en ce que les colliers (1) sont protégés préalablement contre la corrosion au moyen d'une solution de matière plastique.

3. Une tôle de paroi latérale (2) pour camions, pourvue de colliers (1) courbés en forme U, alignés pour la fixation et la fermeture des bâches à la tôle de la paroi latérale, caractérisé en ce que les colliers (1) au côté extérieur de la tôle de paroi latérale (2) sont fixés par collets (3) et au côté intérieur de la tôle de paroi latérale par des collets refoulés (4).

4. Un dispositif pour le rattachement de colliers (1) aux tôles des parois latérales des camions, utilisées pour la fermeture des bâches protectrices, tenues par lesdits colliers (1), ledit dispositif consistant d'une presse verticale, avec un part supérieur comprenant une tête de poinçon (13), et avec une partie inférieure, comprenant une enclume (12), qui est mouvant vers le haut par un cylindre hydraulique ou pneumatique (18), caractérisé en ce que ladite tête de poinçon (13) tient un dispositif de serrage (14), et un carcan (17), pour les colliers (1) creux ou partiellement creux, et que le guidage (6) est pourvu dans sa partie inférieure successivement quelques tarauds (8), des arbres de dilatation (9), et des butées (10), qui sont décalables audessus de l'enclume (12), et ledit guidage fait avancer successivement les tarauds (8), puis les arbres de dilatation (9), et enfin les butées (10) en travers de l'enclume (12), après quoi la tôle de la paroi latérale (2) est poussée en avant.

5. Un dispositif selon la revendication 4, caractérisé en ce que le guidage (6) pour le mouvement vers l'usinage de poinçonner, de la dilatation, et du refoulement des colliers (1) courbés en forme U est conduit par un réglage de la glissière (19) d'après une programmation.
